# EUROPEAN PATENT SPECIFICATION

(11) **EP 2 756 787 B1**
(45) Date of publication and mention of the grant of the patent: **15.03.2017**
(21) Application number: 14150986.9
(22) Date of filing: 13.01.2014
(51) Int. Cl.: A47L 11/40, A47L 9/00

(54) **Robot cleaner**
Reinigungsroboter
Robot nettoyeur

(30) Priority: 16.01.2013 KR 20130004841
(43) Date of publication of application: 23.07.2014
(73) Proprietor: Samsung Electronics Co., Ltd, Gyeonggi-do 443-742 (KR)
(72) Inventor: Park, Sung Jin, Gyeonggi-do (KR); Jeong, Jae Youl, Gyeonggi-Do (KR); Kim, Shin, Gyeonggi-do (KR); Park, Heum Yong, Gyeonggi-do (KR); Lee, Dong Hun, Gyeonggi-do (KR)
(74) Representative: Appleyard Lees IP LLP

(56) References cited:
- WO-A1-2012/086604
- DE-A1- 10 000 407
- JP-A- H09 299 298

## Description

### BACKGROUND

### 1. Field

One or more embodiments relate to a robot cleaner capable of moving in diverse directions and enhancing cleaning efficiency by increasing frictional force between a pad and a floor.

### 2. Description of the Related Art

A robot cleaner is already known e.g. from JP-A-09299288. A robot cleaner is an appliance utilizing an automatic travel function to clean a room or the like by vacuuming foreign materials, such as dust, from a floor of a room without user intervention. The robot cleaner detects a distance to an obstacle, such as furniture, office supplies, walls or the like, present in a zone to be cleaned using a distance sensor, and changes traveling directions by selectively driving a left-wheel motor and a right-wheel motor to perform cleaning of the zone to be cleaned.

Besides robot cleaners capable of vacuuming foreign materials, such as dust, from a floor, robot cleaners capable of wiping floors have been developed recently. A conventional robot cleaner includes pads provided at a bottom thereof and wipes a floor by traveling with the pads closely contacting the floor. The conventional robot cleaner travels using a moving unit which is provided separately from a cleaning unit.

### SUMMARY

One or more embodiments relate to a robot cleaner capable of smoothly moving in diverse directions and enhancing cleaning efficiency by increasing frictional force between a pad and a floor.

Additional aspects and/or advantages of one or more embodiments will be set forth in part in the description which follows and, in part, will be apparent from the description, or may be learned by practice of one or more embodiments of disclosure. One or more embodiments are inclusive of such additional aspects.

In accordance with one or more embodiments, a robot cleaner may include a main body that may include two or more driving units and a case disposed outside the main body to define an external appearance thereof, wherein each of the driving units may include plural motors to generate rotational force, a first subframe connected to at least one of the motors and configured to rotate by receiving the rotational force from the motor, a rotating plate assembly mounted to the first subframe and configured to be slanted with respect to a floor by rotation of the first subframe and to rotate clockwise or counterclockwise by receiving the rotational force from another one of the plural motors, and a pad provided at a bottom surface of the rotating plate assembly and configured to contact the floor. When the bottom surface of the rotating plate assembly is slanted with respect to the floor, nonuniform frictional force may be generated between a bottom surface of the pad and the floor. The robot cleaner may travel in a specific direction through the nonuniform frictional force.

The plural motors may include a first motor and a second motor. The first subframe may rotate about an X-axis by the first motor and may rotate about a Y-axis by the second motor, and the bottom surface of the rotating plate assembly may be slanted with respect to the floor by rotation of the first subframe.

A slanted direction and a slanted angle of the bottom surface of the rotating plate assembly with respect to the floor may be changed according to a degree of rotation of the first subframe about the X-axis or the Y-axis. If the slanted direction of the bottom surface of the rotating plate assembly is changed, a traveling direction of the robot cleaner may be changed. If the slanted angle of the bottom surface of the rotating plate assembly is changed, the frictional force between the pad and floor may be changed.

The pad may be made of a compressible material so that even when the bottom surface of the rotating plate assembly is slanted with respect to the floor, a majority of the bottom surface of the pad comes into contact with the floor.

The first motor may be positioned above the first subframe and the first subframe may be configured to rotate through a rotating shaft connecting the first motor to the first subframe.

The second motor may be positioned next to the first subframe and the first subframe may be configured to rotate through a link connecting the second motor to the first subframe.

The rotating plate assembly may include a rotating shaft mounted to the first subframe and a rotating plate mounted to the rotating shaft.

The plural motors may further include a third motor and the rotating plate may be configured to rotate about the rotating shaft by the third motor.

The robot cleaner may travel through the two or more driving units, in each of which the rotating plate rotates about the rotating shaft while the first subframe is slanted with respect to the floor.

The robot cleaner may travel by reaction to the frictional force between the pad and the floor, and a traveling direction of the robot cleaner may be determined by a slanted direction with respect to the floor and a rotating direction of the rotating plate provided at each of the two or more driving units.

The two or more driving units may include a first driving unit and a second driving unit, and the first driving unit and the second driving unit may be mounted to a main frame.

If a right portion of the bottom surface of the rotating plate provided at the first driving unit and a right portion of the bottom surface of the rotating plate provided at the second driving unit contact the floor and if the rotating plate provided at the first driving unit rotates counterclockwise and the rotating plate provided at the second driving unit rotates clockwise, the robot cleaner may perform cleaning of the floor at a stationary location.

The robot cleaner may further include a third driving unit and a fourth driving unit. The second driving unit may be positioned next to the first driving unit, the third driving unit may be positioned to the rear of the first driving unit, and the fourth driving unit may be positioned to the rear of the second driving unit.

A rotating plate of the third driving unit may move in the same rotating direction and slanted angle as the rotating plate of the first driving unit, and a rotating plate of the fourth driving unit may move in the same rotating direction and slanted angle as the rotating plate of the second driving unit.

In accordance with one or more embodiments, a robot cleaner may include two or more driving units, each of which may include a rotating plate assembly provided with a pad at a bottom surface thereof, a frame to which the rotating plate assembly is mounted, a first motor connected with the frame through a first link and configured to enable the frame to be slanted with respect to a floor, a second motor connected with the frame through a second link arranged to cross the first link and configured to enable the frame to be slanted with respect to the floor, and a third motor mounted to the frame and configured to rotate the rotating plate assembly. When the frame is slanted with respect to the floor, nonuniform frictional force may be generated between the pad and the floor, and the robot cleaner may travel through the nonuniform frictional force and rotation of the rotating plate assembly.

The first link and the second link may be arranged perpendicular to each other.

The rotating plate assembly may include a rotating shaft provided with a gear at an outer circumferential surface thereof and a rotating plate connected with the rotating shaft.

The third motor may be mounted with a gear unit, which may be tooth-engaged with the gear of the rotating shaft.

The frame and the rotating plate may be fixed to each other through a locking unit inserted through the frame and the rotating plate.

The rotating plate may be formed with a hole at a side surface thereof, into which one end portion of the locking unit may be inserted. The frame may be formed with a hole into which the other end portion of the locking unit may be inserted.

Balls may be mounted to both end portions of the first link and both end portions of the second link.

The frame may be provided with ball receiving parts in which the balls are received, and rotational force of the first motor and the second motor may be transmitted to the frame.

As described above, the robot cleaner according to one or more embodiments may travel in all directions on the floor and may enhance cleaning efficiency by increasing frictional force between the pad and the floor.

### BRIEF DESCRIPTION OF THE DRAWINGS

These and/or other aspects will become apparent and more readily appreciated from the following description of embodiments, taken in conjunction with the accompanying drawings of which:
FIG. 1 is a perspective view illustrating a robot cleaner according to one or more embodiments;
FIG. 2 is a perspective view illustrating a main body of the robot cleaner according to one or more embodiments;
FIG. 3 is a partially exploded perspective view of the main body of the robot cleaner according to one or more embodiments;
FIG. 4 is a side view of the main body of the robot cleaner according to one or more embodiments;
FIG. 5 is a view illustrating a rotating state of a first driving unit about an X-axis in the robot cleaner according to one or more embodiments;
FIG. 6 is a view illustrating a rotating state of the first driving unit about a Y-axis in the robot cleaner according to one or more embodiments;
FIG. 7a is a view illustrating an operating state at a stationary location of the robot cleaner according to one or more embodiments;
FIG. 7b is a view illustrating bottom surfaces of pads when the robot cleaner according to one or more embodiments operates at a stationary location;
FIG. 8a is a view illustrating a backward moving state of the robot cleaner according to one or more embodiments;
FIG. 8b is a view illustrating the bottom surfaces of the pads when the robot cleaner according to one embodiment of the present invention moves backward;
FIG. 9a is a view illustrating a sideward moving state of the robot cleaner according to one or more embodiments;
FIG. 9b is a view illustrating the bottom surfaces of the pads when the robot cleaner according to one or more embodiments moves sideways;
FIG. 10a is a view illustrating a diagonally moving state of the robot cleaner according to one or more embodiments;
FIG. 10b is a view illustrating the bottom surfaces of the pads when the robot cleaner according to one or more embodiments moves diagonally;
FIG. 11 is a view illustrating a main body of a robot cleaner according to one or more embodiments;
FIG. 12 is an exploded perspective view of a first driving unit of the robot cleaner according to one or more embodiments;
FIG. 13 is a sectional view of the first driving unit of the robot cleaner according to one or more embodiments;
FIG. 14 is a view illustrating a rotating state of a rotating plate of the first driving unit about the X-axis in the robot cleaner according to one or more embodiments; and
FIG. 15 is a view illustrating a rotating state of the rotating plate of the first driving unit about the Y-axis in the robot cleaner according to one or more embodiments.

### DETAILED DESCRIPTION

Reference will now be made in detail to one or more embodiments, illustrated in the accompanying drawings, wherein like reference numerals refer to like elements throughout. In this regard, embodiments of the present invention may be embodied in many different forms and should not be construed as being limited to embodiments set forth herein, as various changes, modifications, and equivalents of the systems, apparatuses and/or methods described herein will be understood to be included in the invention by those of ordinary skill in the art after embodiments discussed herein are understood. Accordingly, embodiments are merely described below, by referring to the figures, to explain aspects of the present invention.

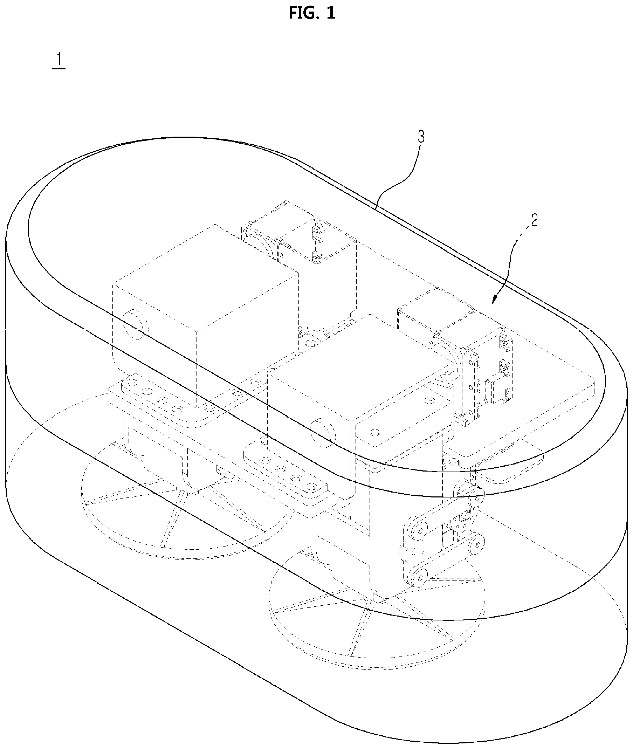

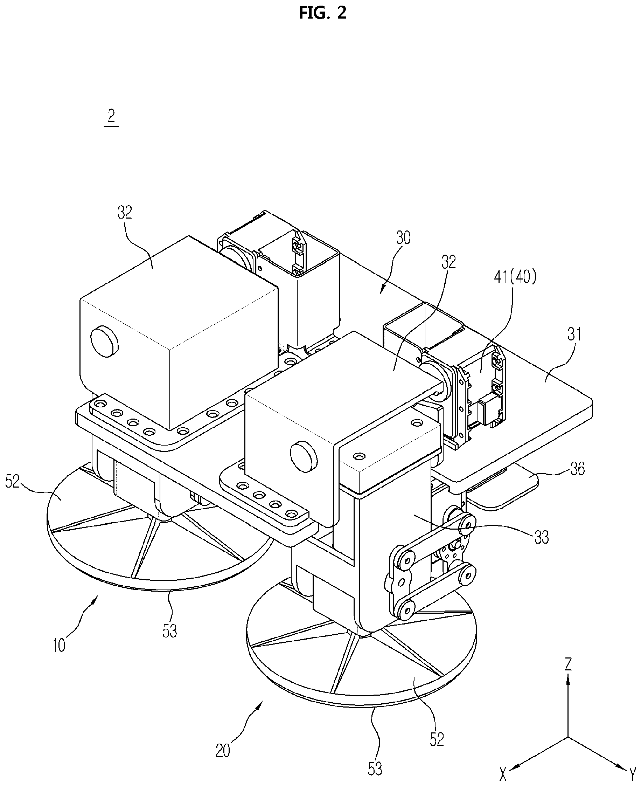

FIG. 1 is a perspective view illustrating a robot cleaner according to one or more embodiments, and FIG. 2 is a perspective view illustrating a main body of the robot cleaner according to one or more embodiments.

Referring to FIGS. 1 and 2, a robot cleaner 1 according to one or more embodiments may include a main body 2 and a housing 3. The housing 3 may envelop the main body 2 and may form an external appearance of the robot cleaner 1.

The main body 2 may include a first driving unit 10 and a second driving unit 20. The second driving unit 20 may be provided corresponding to the first driving unit 10. Hereinafter, the first driving unit 10 will be explained. Operational structure and method of the first driving unit 10 may be similarly applied to the second driving unit 20.

The first driving unit 10 may include a frame 30, a motor 40 and a rotating plate assembly 50. The motor 40 and the rotating plate assembly 50 may be mounted to the frame 30. The frame 30 may include a main frame 31, and the first driving unit 10 and the second driving unit 20 may be mounted to the main frame 31, thereby forming the main body 2. The motor 40 may rotate the frame 30 mounted with the rotating plate assembly 50, to thereby vary a contact region of the rotating plate assembly 50 with the floor. The motor 40 also may rotate the rotating plate assembly 50 to clean the floor.

Hereinafter, a structure of the first driving unit 10 will be explained in detail with reference to the drawings.

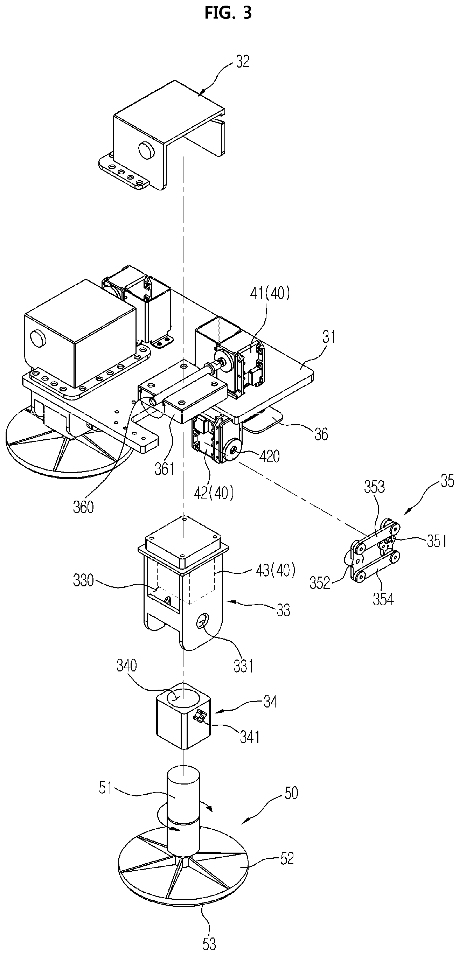

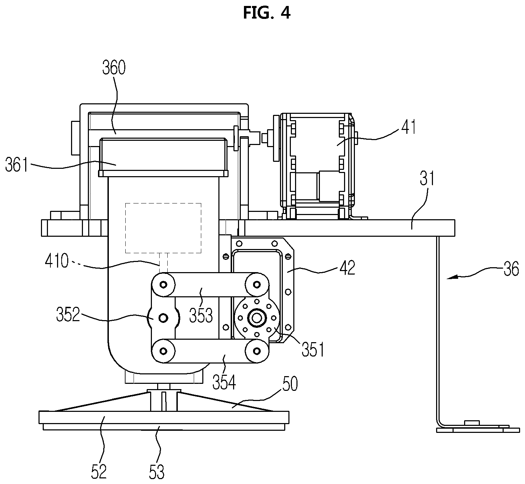

FIG. 3 is a partially exploded perspective view of the main body of the robot cleaner according to one or more embodiments, and FIG. 4 is a side view of the main body of the robot cleaner according to one or more embodiments.

Referring to FIGS. 3 and 4, the robot cleaner 1 according to one or more embodiments may include the frame 30, the motor 40 and the rotating plate assembly 50. The frame 30 may include a main frame 31, a fixing frame 32 and a first subframe 33. The first driving unit 10 and the second driving unit 20 may be mounted to the main frame 31, thereby forming the main body 2.

The fixing frame 32 may be coupled to the main frame 31 to cover an upper portion of the first driving unit 10. The fixing frame 32 may be fixed to an upper surface of the main frame 31 using a fastening member.

The first subframe 33 may be disposed below the main frame 31. The first subframe 33 may be formed with a receiving part 330, in which a driving motor 43 (which will be described later) and the rotating plate assembly 50 may be inserted. The rotating plate assembly 50 may include a rotating shaft 51, which may be connected to the driving motor 43 in the receiving part 330. The rotating shaft 51 may rotate clockwise or counterclockwise by the driving motor 43. A hole 331 may be formed at a portion of the first subframe 33.

A case 34 may also be inserted in the receiving part 330. The case 34 may be formed with a through-hole 340 through which the rotating shaft 51 may pass. The case 34 may further provided with a link coupling part 341. The rotating shaft 51 may pass through the through-hole 340 of the case 34 and may be connected to the driving motor 43 that may be disposed in the receiving part 330. The link coupling part 341 may be disposed at an outer surface of the case 34. The link coupling part 341 may be exposed to the outside of the first subframe 33 through the hole 331 formed at the first subframe 33.

The main frame 31 may be provided with a support frame 36 at a portion thereof to support the main frame 31. The support frame 36 may extend from a bottom surface of the main frame 31 and may contact the floor. Accordingly, in spite of rotation of the first subframe 33 and rotation of the rotating plate assembly 50, the main body 2 may stably move on the floor without shaking by virtue of the support frame 36.

The motor 40 may include a first control motor 41, a second control motor 42 and a driving motor 43. The first control motor 41 and the second control motor 42 may be servomotors, and the driving motor 43 may be a DC motor. The first control motor 41 may be positioned above the main frame 31. The second control motor 42 and the driving motor 43 may be positioned below the main frame 31. However, the positions of the first control motor 41 and the second control motor 42 are not limited to the above-described positions. The first control motor 41 and the second control motor 42 may be controlled to enable the first driving unit 10 to be slanted by a designated angle. In detail, the first control motor 41 may be controlled to rotate the first driving unit 10 about an X-axis, and the second control motor 42 may be controlled to rotate the first driving unit 10 about a Y-axis. The driving motor 43 may be controlled to rotate the rotating plate assembly 50 to rub the floor.

The first control motor 41 may be connected with a rotating shaft 360. The rotating shaft 360 may rotate clockwise or counterclockwise by the first control motor 41. When the rotating shaft 360 rotates, the first subframe 33 may rotate together with the rotating shaft 360.

In detail, the rotating shaft 360 may be connected with a second subframe 361. The second subframe 361 may be fixed to or formed integrally with the rotating shaft 360 in order to rotate together with the rotating shaft 360. The second subframe 361 may be connected to the first subframe 33. Accordingly, the first subframe 33 may also rotate when the second subframe 361 rotates. As a result, the first subframe 33 may rotate about the X-axis by the rotating shaft 360 which may rotate by the first control motor 41.

The second control motor 42 may be connected with the first subframe 33 to rotate the first subframe 33 about the Y-axis. In detail, the link coupling part 341 may be provided at a side surface of the case 34 that may be inserted in the receiving part 330 of the first subframe 33 and may be connected to the second control motor 42 through a link assembly 35.

The link assembly 35 may include a first link 351, a second link 352, a third link 353 and a fourth link 354. The first link 351 may be mounted to a drive shaft 420 that may be provided at the second control motor 42. The second link 352 may be mounted to the link coupling part 341 that may be provided at the side surface of the case 34. The third link 353 and the fourth link 354 may connect the first link 351 and the second link 352. The third link 353 and the fourth link 354 may be arranged in parallel with each other. Accordingly, if the drive shaft 420 of the second control motor 42 rotates clockwise or counterclockwise, the case 34 may rotate about the Y-axis by the link assembly 35. If the case 34 rotates about the Y-axis, the first subframe 33, in which the case 34 may be inserted, may also rotate about the Y-axis.

The rotating plate assembly 50 may include a rotating shaft 51, a rotating plate 52 and a pad 53. The rotating shaft 51 may be inserted into the case 34. One end of the rotating shaft 51 may be mounted to the driving motor 43 in the first subframe 33, and the other end of the rotating shaft 51 may be mounted with the rotating plate 52. The rotating plate 52 may rotate together with the rotating shaft 51 when the rotating shaft 51 rotates. The rotating plate 52 may be formed integrally with the rotating shaft 51. The pad 53, which may be made of a textile material to accomplish wet cleaning, may be attached to a bottom surface of the rotating plate 52. The rotating plate 52 may be provided with an adhesive part (not shown) at the bottom surface thereof, to which the pad 53 may be adhered. In the above-structured rotating plate assembly 50, if the rotating plate 52 rotates about a Z-axis by the driving motor 43, the pad 53 attached to the bottom surface of the rotating plate 52 may wipe the floor.

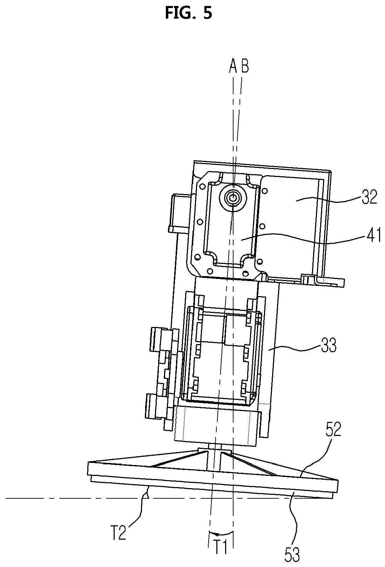

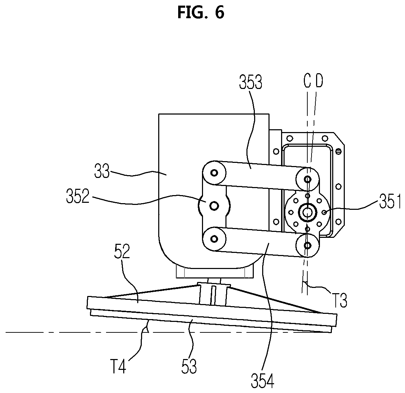

FIG. 5 is a view illustrating a rotating state of the first driving unit about the X-axis in the robot cleaner according to one or more embodiments, and FIG. 6 is a view illustrating a rotating state of the first driving unit about the Y-axis in the robot cleaner according to one or more embodiments.

Referring to FIGS. 5 and 6, the rotating plate 52 may be slanted by a designated angle with respect to the floor by the first driving unit 10 rotating about the X-axis or Y-axis.

If the rotating shaft 360 rotates a designated angle clockwise or counterclockwise about the X-axis by the first control motor 41, the second subframe 361 coupled to the rotating shaft 360, the first subframe 33 mounted to the second subframe 361, and the rotating plate assembly 50 mounted to the first subframe 33 may all be simultaneously rotated. As exemplarily shown in FIG. 5, an angle T1 may be formed between an imaginary line A extending from the rotating shaft 51 of the rotating plate assembly 50 before rotation of the rotating shaft 360 and an imaginary line B extending from the rotating shaft 51 of the rotating plate assembly 50 after rotation of the rotating shaft 360 by a designated angle. At this time, an angle T2 may be formed between the bottom surface of the rotating plate 52 and the floor. The rotation angle T1 of the rotating shaft 360 may be the same as the angle T2 between the bottom surface of the rotating plate 52 and the floor. As described above, the rotating plate 52 may rotate about the X-axis.

If the drive shaft 420 of the second control motor 42 rotates, the first link 351 connected to the drive shaft 420 may also be rotated thereby. If the first link 351 rotates, the second link 352 connected to the first link 351 by the third and fourth links 353 and 354 may rotate in the same direction as the first link 351. For instance, if an angle T3 is formed between the imaginary lines C and D connecting a contact point of the first and third links 351 and 353 and a contact point of the first and fourth links 351 and 354 before and after rotation of the drive shaft 420, an angle T3 may be identically formed between imaginary lines connecting a contact point of the second and third links 352 and 353 and a contact point of the second and fourth links 352 and 354 before and after rotation of the drive shaft 420. As the second link 352 rotates, the case 34 connected with the second link 352 and the rotating plate assembly 50 provided at the case 34 may also rotate. Accordingly, an angle T4 may be formed between the bottom surface of the rotating plate 52 and the floor. The angle T3 and the angle T4 may be the same. As described above, the rotating plate 52 may rotate about the Y-axis.

Because the rotating plate 52 may be slanted with respect to the floor, nonuniform frictional force may be generated between the pad 53 provided at the bottom surface of the rotating plate 52 and the floor.

The rotating shaft 51 of the rotating plate assembly 50 may rotate by the driving motor 43 that may be positioned in the first subframe 33. Accordingly, the rotating plate 52 may rotate about the Z-axis.

The rotating plate 52 may rotate while being slanted by a designated angle with respect to the floor by the first control motor 41 and the second control motor 42. The rotating plate 52 may vary in terms of slanted angle and slanted direction with respect to the floor by the first control motor 41 and the second control motor 42. In detail, the rotating plate 52 may be slanted by rotating about the X-axis by the first control motor 41 and may also be slanted by rotating about the Y-axis by the second control motor 42. The slanted angle and the slanted direction of the rotating plate 52 with respect to the floor may be determined by a degree of rotation about the X-axis or Y-axis.

The pad 53 provided at the bottom surface of the rotating plate 52 may be made of a compressible material. Accordingly, the entire bottom surface of the pad 53 may come into contact with the floor even when the rotating plate 52 is slanted. Since force needed to wipe the floor is relatively large at a region having large frictional force between the pad 53 and the floor, cleaning efficiency (e.g., removal of stains from the floor) may be enhanced.

Difference in partial frictional force of the pad 53 may be generated according to the slanted angle of the rotating plate 52. Frictional force between the floor and a portion of the pad 53 corresponding to a region at which the rotating plate 52 and the floor are relatively close to each other may exceed frictional force between the floor and a portion of the pad 53 corresponding to a region at which the rotating plate 52 and the floor are relatively far from each other. Differences in frictional force between the pad 53 and the floor may cause the traveling direction and speed of the robot cleaner 1 to be varied.

The robot cleaner 1 may travel toward a region of large frictional force between the pad 53 and the floor. As frictional force between the pad 53 and the floor increases, magnitude of frictional force required to drive the robot cleaner 1 may be increased accordingly. Therefore, the traveling speed of the robot cleaner 1 may also be increased.

The first subframe 33 may be slanted by a designated angle in the X-axis direction by the first control motor 41 and may be slanted by a designated angle in the Y-axis direction by the second control motor 42. A control unit (not shown) controls the first control motor 41 and the second control motor 42 so that each of the slanted angles of the first subframe 33 in the X-axis direction and the Y-axis direction may be adequately adjusted. Accordingly, a specific portion of the pad 53 provided at the bottom surface of the rotating plate 52 may contact the floor at a specific contact area.

The robot cleaner 1 may perform cleaning while traveling in a specific direction according to a contact position of the pad 53 with the floor and a rotating direction of the rotating plate 52 or the pad 53 about the Z-axis. In detail, the traveling direction of the robot cleaner 1 may be changed according to the relative contact positions of the pad 53 provided at the first driving unit 10 and the pad 53 provided at the second driving unit 20 with the floor, or according to the rotating directions of the pad 53 provided at the first driving unit 10 and the pad 53 provided at the second driving unit 20 about the Z-axis. For instance, although the contact portions of the pads 53 of the first and second driving units 10 and 20 with the floor may be identical, when one of the pads 53 rotates clockwise and the other rotates counterclockwise, the traveling direction of the robot cleaner 1 may be changed.

As described above, because the robot cleaner 1 may travel by frictional force, between the pad 53 and the floor, functioning as driving force, traveling of the robot cleaner 1 may be free from restraint by a material of the floor or obstacles in comparison with a robot cleaner configured to travel using wheels. Further, the robot cleaner 1 may travel in all directions by adjusting the slanted angle and slanted direction of the rotating plate 52 and the rotating direction of the pad 53.

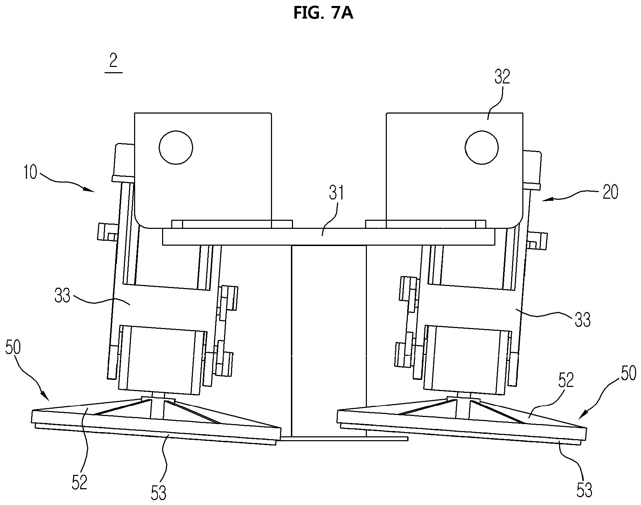

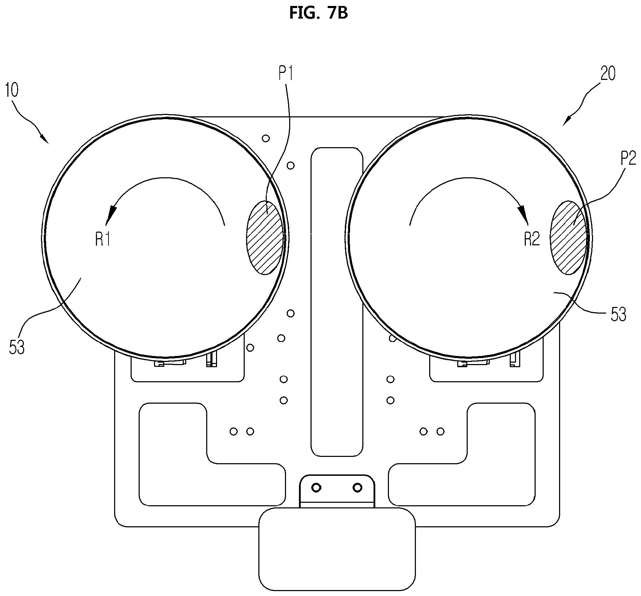

FIG. 7a is a view illustrating an operating state at a stationary location of the robot cleaner according to one or more embodiments, and FIG. 7b is a view illustrating the bottom surfaces of the pads when the robot cleaner according to one or more embodiments operates at a stationary location.

Referring to FIGS. 7a and 7b, the rotating plate 52 provided at the first driving unit 10 and the rotating plate 52 provided at the second driving unit 20 may rotate while being slanted such that a right portion of the bottom surface of each rotating plate 52 is closest to the floor. At this time, frictional force between a right portion P1 of the bottom surface of the pad 53 provided at the first driving unit 10 and the floor may exceed frictional force between any other portion of the pad 53 and the floor. Similarly, frictional force between a right portion P2 of the bottom surface of the pad 53 provided at the second driving unit 20 and the floor may exceed frictional force between any other portion of the pad 53 and the floor. That is, P1 and P2 indicated in FIG. 7b are portions of the bottom surfaces of the respective pads 53, at which frictional force with the floor may be increased. At this time, the center of gravity of the robot cleaner may be between the pad 53 provided at the first driving unit 10 and the pad 53 provided at the second driving unit 20.

The rotating plate 52 of the first driving unit 10 may rotate counterclockwise R1. The rotating plate 52 of the second driving unit 20 may rotate clockwise R2. Because the rotating plate 52 of the first driving unit 10 and the rotating plate 52 of the second driving unit 20 may rotate in opposite directions with increased frictional force being applied between the right portions of the bottom surfaces of the pads 53 provided at the first and second driving units 10 and 20 and the floor, the robot cleaner 1 may operate at a stationary location, that is, without movement. Further, because the rotating plate 52 may rotate about the Z-axis, the pad 53 may clean the floor by rotating at a stationary location.

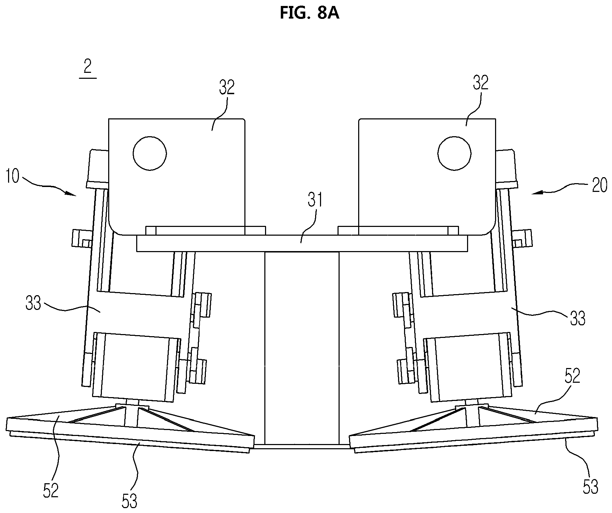

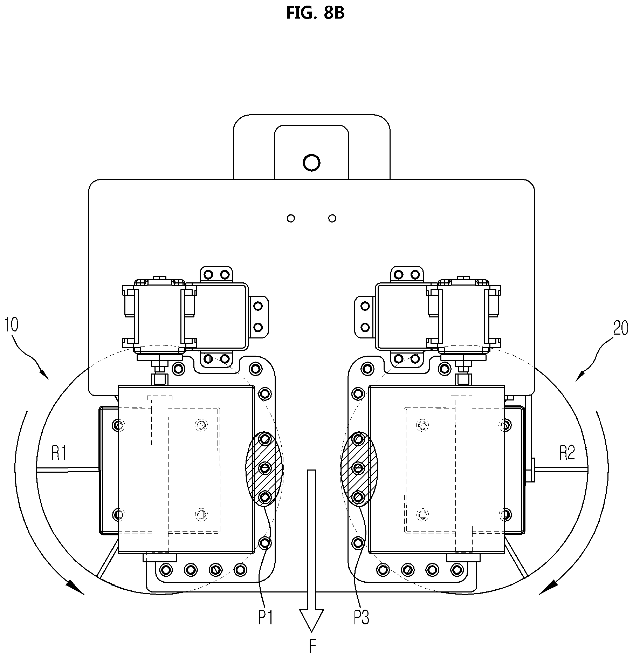

FIG. 8a is a view illustrating a backward moving state of the robot cleaner according to one or more embodiments, and FIG. 8b is a view illustrating the bottom surfaces of the pads when the robot cleaner according to one or more embodiments moves backward.

Referring to FIGS. 8a and 8b, the rotating plate 52 provided at the first driving unit 10 and the rotating plate 52 provided at the second driving unit 20 may rotate while being slanted such that a right portion of the bottom surface of the rotating plate 52 of the first driving unit 10 and a left portion of the bottom surface of the rotating plate 52 of the second driving unit 20 are closest to the floor. At this time, frictional force between a right portion P1 of the bottom surface of the pad 53 provided at the first driving unit 10 and the floor may exceed frictional force between any other portion of the pad 53 and the floor. Similarly, frictional force between a left portion P3 of the bottom surface of the pad 53 provided at the second driving unit 20 and the floor may exceed frictional force between any other portion of the pad 53 and the floor. That is, P1 and P3 indicated in FIG. 8b are portions of the bottom surfaces of the respective pads 53, at which frictional force with the floor may be increased.

At this time, the rotating plate 52 of the first driving unit 10 may rotate counterclockwise R1. The rotating plate 52 of the second driving unit 20 may rotate clockwise R2. Because the rotating plate 52 of the first driving unit 10 and the rotating plate 52 of the second driving unit 20 may rotate in opposite directions (i.e., counterclockwise R1 and clockwise R2, respectively) with increased frictional force being applied between the right portion P1 of the bottom surface of the pad 53 of the first driving unit 10 and the floor and between the left portion P3 of the bottom surface of the pad 53 of the second driving unit 20 and the floor, the robot cleaner 1 may move backward (in a direction F indicated in FIG. 8b) by reaction to frictional force applied between the pads 53 of the first and second driving units 10 and 20 and the floor.

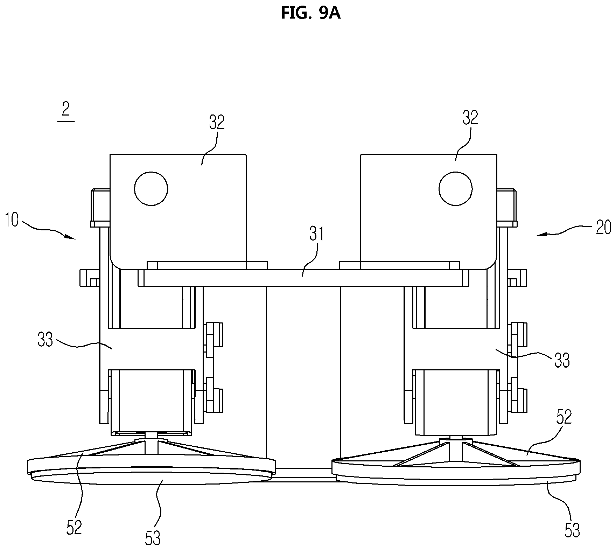

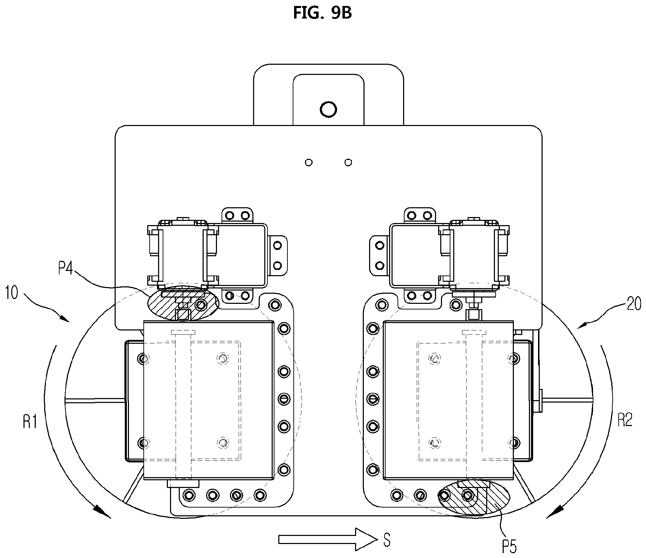

FIG. 9a is a view illustrating a sideward moving state of the robot cleaner according to one or more embodiments, and FIG. 9b is a view illustrating the bottom surfaces of the pads when the robot cleaner according to one or more embodiments moves sideways.

Referring to FIGS. 9a and 9b, the rotating plate 52 provided at the first driving unit 10 and the rotating plate 52 provided at the second driving unit 20 may rotate while being slanted such that a front portion of the bottom surface of the rotating plate 52 of the first driving unit 10 and a rear portion of the bottom surface of the rotating plate 52 of the second driving unit 20 are closest to the floor. At this time, frictional force between a front portion P4 of the bottom surface of the pad 53 provided at the first driving unit 10 and the floor may exceed frictional force between any other portion of the pad 53 and the floor. Similarly, frictional force between a rear portion P5 of the bottom surface of the pad 53 provided at the second driving unit 20 and the floor may exceed frictional force between any other portion of the pad 53 and the floor. That is, P4 and P5 indicated in FIG. 9b are portions of the bottom surfaces of the respective pads 53, at which frictional force with the floor may be increased.

At this time, the rotating plate 52 of the first driving unit 10 may rotate counterclockwise R1. The rotating plate 52 of the second driving unit 20 may rotate clockwise R2. Because the rotating plate 52 of the first driving unit 10 and the rotating plate 52 of the second driving unit 20 may rotate in opposite directions (i.e., counterclockwise R1 and clockwise R2, respectively) with increased frictional force being applied between the front portion P4 of the bottom surface of the pad 53 of the first driving unit 10 and the floor and between the rear portion P5 of the bottom surface of the pad 53 of the second driving unit 20 and the floor, the robot cleaner 1 may move to the right (in a direction S indicated in FIG. 9b) by reaction to frictional force applied between the pads 53 of the first and second driving units 10 and 20 and the floor.

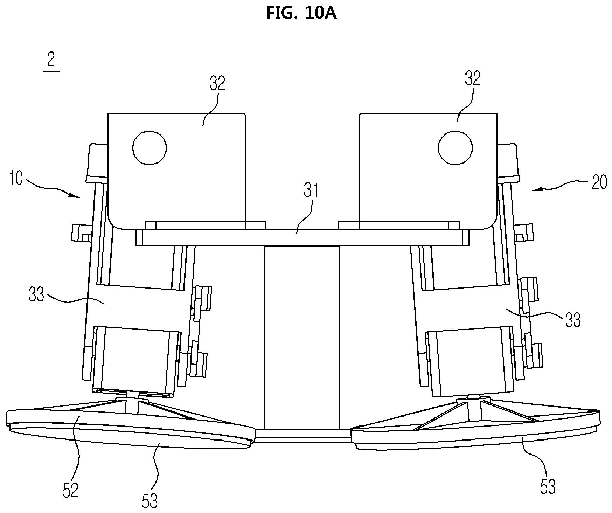

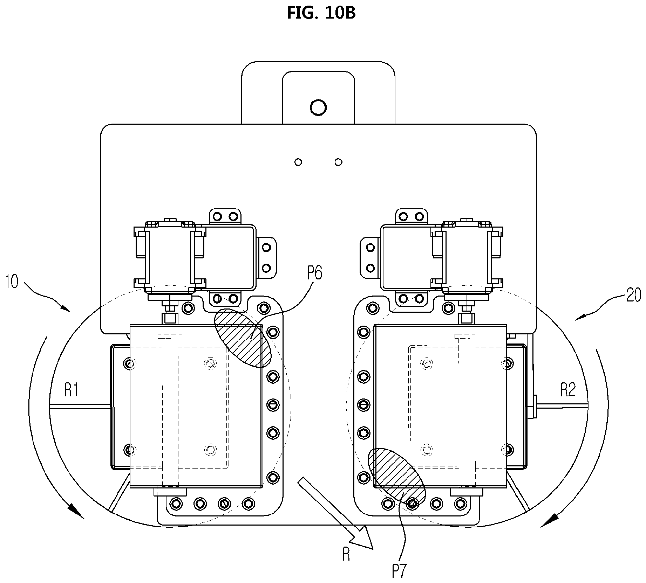

FIG. 10a is a view illustrating a diagonally moving state of the robot cleaner according to one or more embodiments, and FIG. 10b is a view illustrating the bottom surfaces of the pads when the robot cleaner according to one or more embodiments moves diagonally.

Referring to FIGS. 10a and 10b, the rotating plate 52 provided at the first driving unit 10 and the rotating plate 52 provided at the second driving unit 20 may rotate while being slanted such that a right-front portion of the bottom surface of the rotating plate 52 of the first driving unit 10 and a left-rear portion of the bottom surface of the rotating plate 52 of the second driving unit 20 are closest to the floor. At this time, frictional force between a right-front portion P6 of the bottom surface of the pad 53 provided at the first driving unit 10 and the floor may exceed frictional force between any other portion of the pad 53 and the floor. Similarly, frictional force between a left-rear portion P7 of the bottom surface of the pad 53 provided at the second driving unit 20 and the floor may exceed frictional force between any other portion of the pad 53 and the floor. That is, P6 and P7 indicated in FIG. 10b are portions of the bottom surfaces of the respective pads 53, at which frictional force with the floor may be increased.

At this time, the rotating plate 52 of the first driving unit 10 may rotate counterclockwise R1. The rotating plate 52 of the second driving unit 20 may rotate clockwise R2. Because the rotating plate 52 of the first driving unit 10 and the rotating plate 52 of the second driving unit 20 may rotate in opposite directions (i.e., counterclockwise R1 and clockwise R2, respectively) with increased frictional force being applied between the right-front portion P6 of the bottom surface of the pad 53 of the first driving unit 10 and the floor and between the left-rear portion P7 of the bottom surface of the pad 53 of the second driving unit 20 and the floor, the robot cleaner 1 may move diagonally backward to the right (in a direction R indicated in FIG. 10b) by reaction to frictional force applied between the pads 53 of the first and second driving units 10 and 20 and the floor.

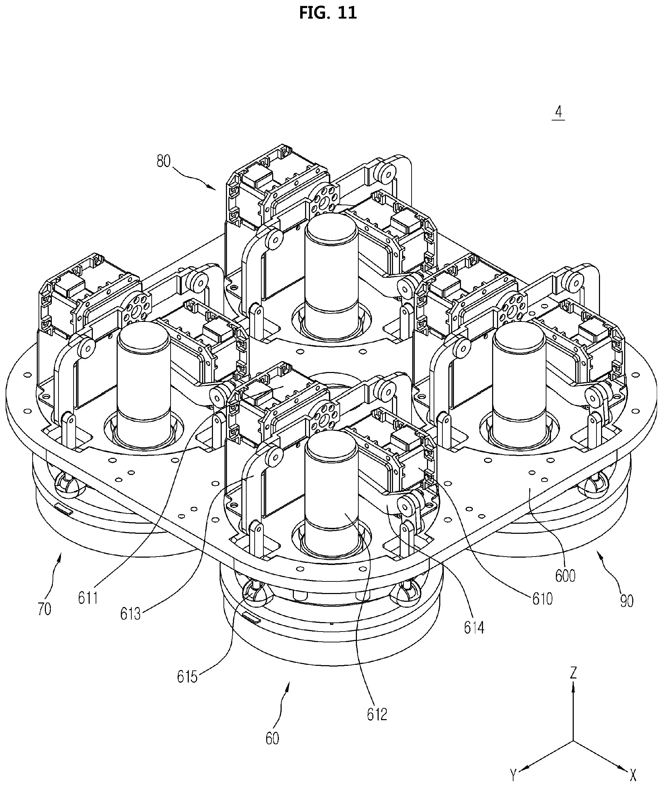

FIG. 11 is a view illustrating a main body of a robot cleaner according to one or more embodiments.

Referring to FIG. 11, a main body 4 of a robot cleaner according to one or more embodiments may include a first driving unit 60, a second driving unit 70, a third driving unit 80 and a fourth driving unit 90. The first driving unit 60, the second driving unit 70, the third driving unit 80 and the fourth driving unit 90 may be mounted to a frame 600. Since the second driving unit 70, the third driving unit 80 and the fourth driving unit 90 have the same constitution as the first driving unit 60, constitution of the first driving unit 60 will be representatively explained hereinafter.

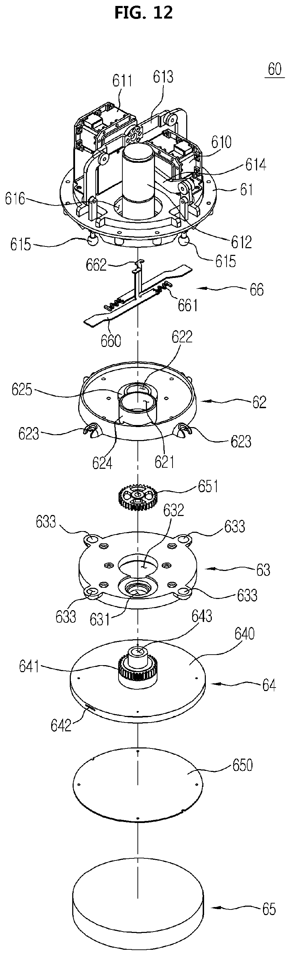

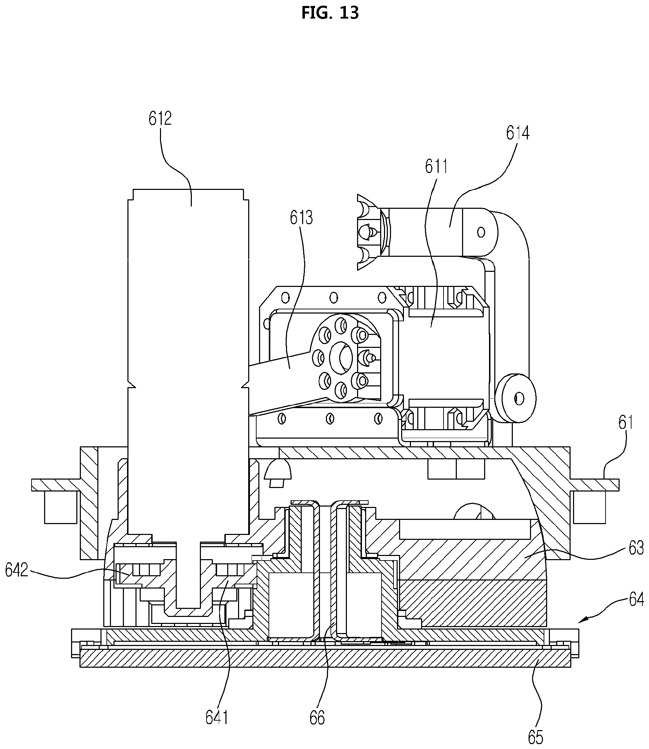

FIG. 12 is an exploded perspective view of the first driving unit of the robot cleaner according to one or more embodiments, and FIG. 13 is a sectional view of the first driving unit of the robot cleaner according to one or more embodiments.

Referring to FIGS. 12 and 13, the first driving unit 60 may include a fixing frame 61, a first subframe 62, a second subframe 63, a rotating plate assembly 64, and a pad 65. A first control motor 610 and a second control motor 611 may be disposed above the fixing frame 61. A driving motor 612 may be mounted to the first subframe 62.

The first control motor 610 may be connected to the first link 614 and the second control motor 611 may be connected to the second link 613. The first link 614 may be connected to a drive shaft of the first control motor 610. The first link 614 may have a pair of end portions which may be bent to be seated on the first subframe 62. A ball 615 may be mounted to each of the end portions of the first link 614. Similarly, the second link 613 may be connected to a drive shaft of the second control motor 611 and may have a pair of end portions which may be bent to be seated on the first subframe 62. A ball 615 may be mounted to each of the end portions of the second link 613. The first link 614 and the second link 613 may be arranged to cross each other. For instance, the first link 614 connected to the first control motor 610 and the second link 613 connected to the second control motor 611 may be arranged perpendicular to each other. However, the crossing angle between the first link 614 and the second link 613 is not limited to 90 degrees. The fixing frame 61 may be formed with a hole 616 into which the driving motor 612 may be inserted so as to be connected to an external power source or the like.

The first subframe 62 may be disposed below the fixing frame 61. The first subframe 62 may be provided with s 623 defining spaces in which the balls 615 respectively provided at both end portions of the first link 614 and the second link 613 may be inserted. The first subframe 62 may be formed with a hole 625 in which the driving motor 612 may be inserted and a rotating shaft insertion hole 622 in which a rotating shaft 641 provided at the rotating plate assembly 64 may be inserted. The hole 625 and the rotating shaft insertion hole 622 may be positioned adjacently. The hole 625 of the first subframe 62 may communicate with the hole 616 of the fixing frame 61.

The second subframe 63 may be formed with a rotating shaft insertion hole 632 in which the rotating shaft 641 provided at the rotating plate assembly 64 may be inserted. The rotating shaft insertion hole 632 of the second subframe 63 may communicate with the rotating shaft insertion hole 622 of the first subframe 62. The second subframe 63 may also be formed with a gear receiving part 631 in which a gear unit 651 may be received.

The second subframe 63 may be provided with second ball receiving parts 633 defining spaces in which the balls 615 respectively provided at both end portions of the first link 614 and the second link 613 may be inserted. When the first subframe 62 and the second subframe 63 are coupled, each of the first ball receiving parts 623 of the first subframe 62 and each of the second ball receiving parts 633 of the second subframe 63 may define a unitary ball receiving space together, in which each of the balls 615 provided at the first and second links 614 and 613 may be received. Through such engagement using the balls 615 and the first and second ball receiving parts 623 and 633, the first subframe 62 and the second subframe 63 may be tilted according to operation of the first link 614 and the second link 613.

The gear receiving part 631 may receive one end portion of the driving motor 612 inserted through the hole 616 of the fixing frame 61 and the hole 621 of the first subframe 62. That is, the gear unit 651 may be coupled to one end portion of the driving motor 612 and the gear unit 651 may be received in the gear receiving part 631 of the second subframe 63. A portion of the gear receiving part 631 and a portion of the rotating shaft insertion hole 632 may communicate with each other, so that the rotating shaft 641 of the rotating plate assembly 64 may be tooth-engaged with the gear unit 651.

The rotating plate assembly 64 provided with the rotating shaft 641 may further include a rotating plate 640. The rotating shaft 641 may be positioned at a center portion of an upper surface of the rotating plate 640. The rotating shaft 641 may be formed with a through-hole 643. A chamber (not shown) may be mounted in the through-hole 643 to supply water to the pad 65 mounted to a bottom surface of the rotating plate 640. The rotating shaft 641 may be provided with a gear at an outer circumferential surface thereof, which may be configured to be tooth-engaged with the gear unit 651. The rotating plate 640 may be formed with a locking hole 642 at a side surface thereof, into which a locking unit 66 may be inserted.

In order to mount the pad 65 to the bottom surface of the rotating plate assembly 64, the rotating plate 640 may be provided with an adhesive part 650, to which the pad 65 may be adhered, at the bottom surface thereof.

If the gear unit 651 coupled to the driving motor 612 rotates, the rotating shaft 641 tooth-engaged with the gear unit 651 may rotate and thus the rotating plate 640 may rotate about the Z-axis. Accordingly, the pad 65 may wipe the floor while rotating at a stationary location.

The first driving unit 60 further may include a locking unit 66. The locking unit 66 may pass through the rotating shaft insertion hole 622 of the first subframe 62, the rotating shaft insertion hole 632 of the second subframe 63, and the through-hole 643 of the rotating shaft 641. The locking unit 66 may include a bent part 662 formed at a top thereof. The bent part 662 may pass through the rotating shaft insertion holes 622 and 632 and may be hung on an upper surface of the first subframe 62. A lower end of the locking unit 66 may be positioned at a bottom surface of the rotating plate 640. The lower end of the locking unit 66 may be inserted into the locking hole 642 formed at the side surface of the rotating plate 640. Accordingly, the first subframe 62, the second subframe 63 and the rotating plate 640 may be fixedly locked by the locking unit 66.

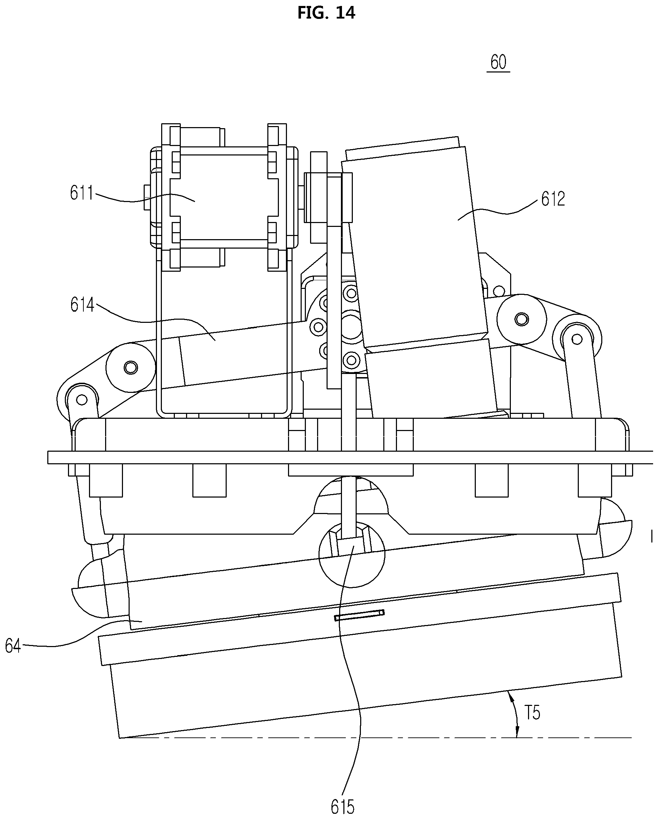

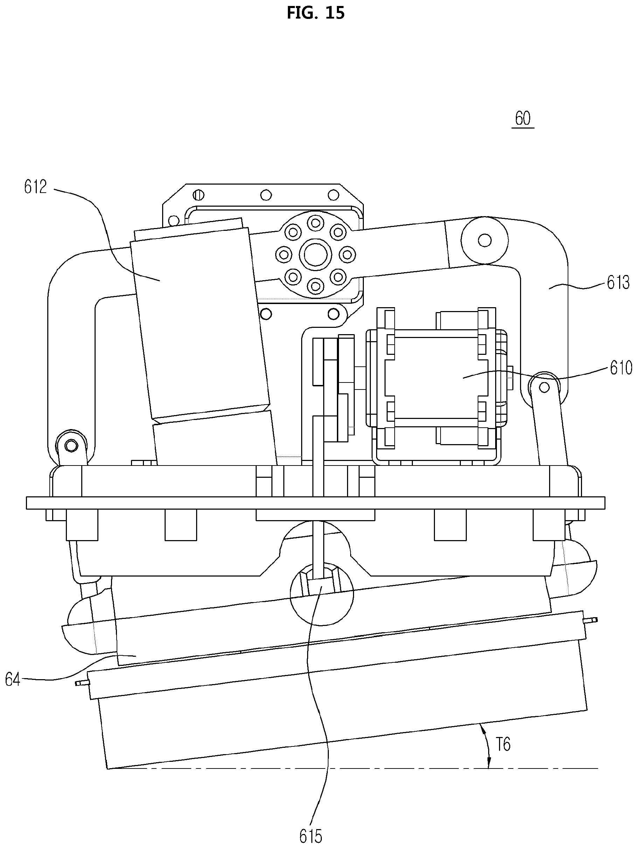

FIG. 14 is a view illustrating a rotating state of the rotating plate of the first driving unit about the X-axis in the robot cleaner according to one or more embodiments, and FIG. 15 is a view illustrating a rotating state of the rotating plate of the first driving unit about the Y-axis in the robot cleaner according to one or more embodiments.

Referring to FIGS. 14 and 15, the rotating plate 640 of the first driving unit 60 may rotate about the X-axis or Y-axis in order to be slanted with respect to the floor by the first control motor 610 and the second control motor 611. For instance, if the first link 614 rotates clockwise or counterclockwise by rotation of the first control motor 610, the rotating plate 640 may rotate about the Y-axis according to the rotating direction of the first link 614 and may be slanted with respect to the floor. As the first link 614 rotates, the first subframe 62 and the second subframe 63 may rotate by the balls 615 provided at both end portions of the first link 614 and received in the ball receiving parts, and the rotating plate assembly 64 coupled to the first and second subframes 62 and 63 may also be rotated thereby. Accordingly, the rotating plate 640 rotates about the Y-axis to be slanted with respect to the floor.

If the second link 613 rotates clockwise or counterclockwise by rotation of the second control motor 611, the rotating plate 640 may rotate about the X-axis according to the rotating direction of the second link 613 and may be slanted with respect to the floor. As the second link 613 rotates, the first subframe 62 and the second subframe 63 may rotate by the balls 615 provided at both end portions of the second link 613 and received in the ball receiving parts, and the rotating plate assembly 64 coupled to the first and second subframes 62 and 63 may also be rotated thereby. Accordingly, the rotating plate 640 may rotate about the X-axis to be slanted with respect to the floor.

As described above, if the rotating plate 640 rotates about the X-axis or Y-axis and is slanted with respect to the floor, even when the whole bottom surface of the pad 65 provided at the bottom surface of the rotating plate 640 comes into contact with the floor, frictional force between a specific portion of the bottom surface of the pad 65 and the floor may exceed frictional force between any other portion of the bottom surface of the pad 65 and the floor.

A control unit (not shown) may adjust the slanted angle and the slanted direction of the rotating plate 640 by controlling the first control motor 610 and the second control motor 611. The control method of the rotating plate 640 of the first driving unit 60 may be similarly applied to control of the rotating plate of the second driving unit 70. Further, the main body 4 may move in a specific direction according to the slanted angles and the slanted directions of the first and second driving units 60 and 70 and the rotating directions of the rotating plates 640 of the first and second driving units 60 and 70. The control method of movement of the main body in the previous embodiment may be similarly applied to control of movement of the main body 4 in this embodiment.

In addition to the first driving unit 60 and the second driving unit 70, the main body 4 may further include the third driving unit 80 and the fourth driving unit 90. If the second driving unit 70 is positioned next to the first driving unit 60, the third driving unit 80 is positioned to the rear of the first driving unit 60 and the fourth driving unit 90 is positioned to the rear of the second driving unit 70, the rotating plate 640 of the third driving unit 80 may move in the same rotating direction and slanted direction as the rotating plate 640 of the first driving unit 60, and the rotating plate 640 of the fourth driving unit 90 may move in the same rotating direction and slanted direction as the rotating plate 640 of the second driving unit 70. The number of driving units provided at the main body 4 is not limited to four. The first control motor, the second control motor, and the driving motor may be named the first motor, the second motor, and the third motor, respectively.

As is apparent from the above description, the robot cleaner according to the embodiments of the present invention may travel in all directions possibly without interference with obstacles. Further, since frictional force may be sufficiently generated between the pad and the floor, cleaning efficiency may be enhanced.

While aspects of the present invention have been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments. Suitable results may equally be achieved if the described techniques are performed in a different order and/or if components in a described system, architecture, device, or circuit are combined in a different manner and/or replaced or supplemented by other components or their equivalents.

Thus, although a few embodiments have been shown and described, with additional embodiments being equally available, it would be appreciated by those skilled in the art that changes may be made in these embodiments without departing from the principles and spirit of the invention, the scope of which is defined in the claims.

## Claims

1. A robot cleaner (1) comprising:
two or more driving units (10, 20), each of the two or more driving units (10, 20) including:
a rotating plate assembly (50) provided with a pad (53) at a bottom surface thereof;
a plurality of motors (40) for driving the rotating plate assembly (50) to rotate and for slanting the rotating plate assembly (50) with respect to a floor;
and wherein, when the bottom surface of the rotating plate assembly (50) is slanted with respect to the floor, rotation of the rotating plate assembly (50) generates a nonuniform frictional force between a bottom surface of the pad (53) and the floor, and
the robot cleaner (1) travels through the nonuniform frictional force;
wherein the plurality of motors (40) include:
a first (41) or second (42) motor configured to enable the rotating plate assembly (50) to be slanted with respect to a floor; and
a third motor (43) configured to rotate the rotating plate assembly (50).

2. The robot cleaner (1) of claim 1,
wherein each of the driving units (10, 20) includes:
a first subframe (33) ; and
the rotating plate assembly (50) is mounted to the first subframe (30) and the first subframe (30) is connected to the first motor (41) or the second motor (42) so as to be configured to be slanted with respect to the floor by rotation of the first subframe (30).

3. The robot cleaner (1) according to claim 2, wherein the first subframe (30) is connected to the first motor (41) and the second motor (42) so as to be configured to rotate about an X-axis by the first motor (41) and rotate about a Y-axis by the second motor (42) .

4. The robot cleaner (1) of claim 3 wherein:
the first motor (41) is connected with the subframe (30) through a first link (360); and
the second motor (42) is connected with the subframe (30) through a second link (35) arranged to cross the first link.

5. The robot cleaner (1) according to claim 4, wherein the first link (360) and the second link (35) are arranged perpendicular to each other.

6. The robot cleaner (1) according to any of claims 3 to 5, wherein each of the two or more driving units are configured such that a slanted direction and a slanted angle of the bottom surface of the rotating plate assembly (50) with respect to the floor are changed according to a degree of rotation of the first subframe about the X-axis or the Y-axis and the rotating direction of the rotating plate assembly is changed according to an operating condition of the third motor,
wherein a travelling direction of the robot cleaner is dictated by:
the slanted direction of the bottom surface of the rotating plate assembly;
the slanted angle of the bottom surface of the rotating plate assembly; and
the rotating direction of the of the rotating plate.

7. The robot cleaner (1) according to any of claims 3 to 6, wherein the first motor (41) is positioned above the first subframe (30) and the first subframe is configured to rotate through a rotating shaft (360) connecting the first motor (41) to the first subframe (30).

8. The robot cleaner (1) according to any of claims 2 to 7, wherein the second motor (42) is positioned next to the first subframe (30) and the first subframe is configured to rotate through a link (35) connecting the second motor to the first subframe.

9. The robot cleaner (1) according to any of claim 2 to 8, wherein the rotating plate assembly (50) includes a rotating shaft (51) mounted to the first subframe (30) and a rotating plate (52) mounted to the rotating shaft (51).

10. The robot cleaner (1) according to claim 9, wherein the rotating plate (52) is configured to rotate about an axis of the rotating shaft by the third motor (43).

11. The robot cleaner (1) according to claim 9 or 10, wherein the rotating shaft (51) is provided with a gear at an outer circumferential surface thereof; and
wherein the third motor (43) is mounted with a gear unit, which is tooth-engaged with the gear of the rotating shaft.

12. The robot cleaner (1) according to claim 11, wherein the subframe (30) and the rotating plate (52) are fixed to each other through a locking unit inserted through the frame and the rotating plate.

13. The robot cleaner (1) according to claim 11 when depending from claim 5, wherein the first link or the second link is provided with balls, the frame is provided with ball receiving parts in which the balls are respectively received, and the rotating plate rotates by rotational force of the first motor and the second motor.

14. The robot cleaner (1) according to any preceding claim, wherein the pad (53) is made of a compressible material so that when the bottom surface of the rotating plate assembly is slanted with respect to the floor, a majority of the bottom surface of the pad comes into contact with the floor.

## Patentansprüche

1. Reinigungsroboter (1), umfassend:
zwei oder mehr Antriebseinheiten (10, 20), wobei jede der zwei oder mehr Antriebseinheiten (10, 20) aufweist:
eine Drehplattenanordnung (50), die an einer Unterseite mit einer Auflage (53) versehen ist;
mehrere Motoren (40) zum Rotationsantrieb der Drehplattenanordnung (50) und zum Schrägstellen der Drehplattenanordnung (50) bezüglich eines Fußbodens;
und wobei, wenn die Unterseite der Drehplattenanordnung (50) bezüglich des Fußbodens schräggestellt ist, eine Drehung der Drehplattenanordnung (50) eine ungleichmäßige Reibungskraft zwischen einer Unterseite der Auflage (53) und dem Fußboden erzeugt, und
der Reinigungsroboter (1) sich durch die ungleichmäßige Reibungskraft bewegt;
wobei die mehreren Motoren (40) aufweisen:
einen ersten (41) oder zweiten (42) Motor, die dafür ausgelegt sind zu ermöglichen, dass die Drehplattenanordnung (50) bezüglich eines Fußbodens schräggestellt wird; und
einen dritten Motor (43) der dafür ausgelegt ist, die Drehplattenanordnung (50) zu drehen.

2. Reinigungsroboter (1) nach Anspruch 1,
wobei jede der Antriebseinheiten (10, 20) aufweist:
einen ersten Unterrahmen (33);
wobei die Drehplattenanordnung (50) an dem ersten Unterrahmen (30) angebracht ist und der erste Unterrahmen (30) mit dem ersten Motor (41) oder dem zweiten Motor (42) verbunden ist, so dass er dafür ausgelegt ist, durch Drehung des ersten Unterrahmens (30) bezüglich des Fußbodens schräggestellt zu werden.

3. Reinigungsroboter (1) nach Anspruch 2, wobei der erste Unterrahmen (30) mit dem ersten Motor (41) und dem zweiten Motor (42) verbunden ist, so dass er dafür ausgelegt ist, sich durch den ersten Motor (41) um eine X-Achse zu drehen und sich durch den zweiten Motor (42) um eine Y-Achse zu drehen.

4. Reinigungsroboter (1) nach Anspruch 3, wobei:
der erste Motor (41) mit dem Unterrahmen (30) durch ein erstes Verbindungsstück (360) verbunden ist; und
der zweite Motor (42) mit dem Unterrahmen (30) durch ein zweites Verbindungsstück (35) verbunden ist, das so angeordnet ist, dass es das erste Verbindungsstück kreuzt.

5. Reinigungsroboter (1) nach Anspruch 4, wobei das erste Verbindungsstück (360) und das zweite Verbindungsstück (35) zueinander senkrecht angeordnet sind.

6. Reinigungsroboter (1) nach einem der Ansprüche 3 bis 5, wobei jede der zwei oder mehr Antriebseinheiten derart ausgebildet ist, dass eine Schrägstellungsrichtung und ein Schrägstellungswinkel der Unterseite der Drehplattenanordnung (50) bezüglich des Fußbodens entsprechend einem Drehungsgrad des ersten Unterrahmens um die X-Achse oder die Y-Achse geändert werden und die Drehrichtung der Drehplattenanordnung entsprechend einem Betriebszustand des dritten Motors geändert wird, wobei eine Fahrtrichtung des Reinigungsroboters bestimmt wird von:
der Schrägstellungsrichtung der Unterseite der Drehplattenanordnung;
dem Schrägstellungswinkel der Unterseite der Drehplattenanordnung; und
der Drehrichtung der Drehplatte.

7. Reinigungsroboter (1) nach einem der Ansprüche 3 bis 6,
wobei der erste Motor (41) über dem ersten Unterrahmen (30) positioniert ist und der erste Unterrahmen dafür ausgelegt ist, sich durch eine rotierende Welle (360) zu drehen, die den ersten Motor (41) mit dem ersten Unterrahmen (30) verbindet.

8. Reinigungsroboter (1) nach einem der Ansprüche 2 bis 7, wobei der zweite Motor (42) neben dem ersten Unterrahmen (30) positioniert ist und der erste Unterrahmen dafür ausgelegt ist, sich durch ein Verbindungsstück (35) zu drehen, das den zweiten Motor mit dem ersten Unterrahmen verbindet.

9. Reinigungsroboter (1) nach einem der Ansprüche 2 bis 8, wobei die Drehplattenanordnung (50) eine rotierende Welle (51), die an dem ersten Unterrahmen (30) angebracht ist, und eine Drehplatte (52), die an der rotierenden Welle (51) angebracht ist, aufweist.

10. Reinigungsroboter (1) nach Anspruch 9, wobei die Drehplatte (52) dafür ausgelegt ist, sich durch den dritten Motor (43) um eine Achse der rotierenden Welle zu drehen.

11. Reinigungsroboter (1) nach Anspruch 9 oder 10, wobei die rotierende Welle (51) an einer Außenumfangsfläche mit einem Zahnrad versehen ist; und
wobei der dritte Motor (43) mit einer Getriebeeinheit angebracht ist, welche mit dem Zahnrad der rotierenden Welle in Zahneingriff steht.

12. Reinigungsroboter (1) nach Anspruch 11, wobei der Unterrahmen (30) und die Drehplatte (52) durch eine Verriegelungseinheit aneinander befestigt sind, die durch den Rahmen und die Drehplatte hindurch eingesetzt ist.

13. Reinigungsroboter (1) nach Anspruch 11, wenn von Anspruch 5 abhängig, wobei das erste Verbindungsstück oder das zweite Verbindungsstück mit Kugeln versehen ist, wobei der Rahmen mit Kugelaufnahmeteilen versehen ist, in welchen die Kugeln jeweils aufgenommen sind, und die Drehplatte sich durch die Drehkraft des ersten Motors und des zweiten Motors dreht.

14. Reinigungsroboter (1) nach einem der vorhergehenden Ansprüche, wobei die Auflage (53) aus einem zusammendrückbaren Material hergestellt ist, so dass, wenn die Unterseite der Drehplattenanordnung bezüglich des Fußbodens schräggestellt ist, ein überwiegender Teil der Unterseite der Auflage mit dem Fußboden in Kontakt kommt.

## Revendications

1. Robot nettoyeur (1), comprenant:
deux ou plus de deux unités d'entraînement (10, 20), chacune des deux ou plus de deux unités d'entraînement (10, 20) comprenant:
un ensemble de plaque rotatif (50) pourvu d'un patin (53) à une surface inférieure de celui-ci;
une pluralité de moteurs (40) pour entraîner l'ensemble de plaque rotatif (50) à tourner et pour incliner l'ensemble de plaque rotatif (50) par rapport à un sol;
et dans lequel, lorsque la surface inférieure de l'ensemble de plaque rotatif (50) est inclinée par rapport au sol, une rotation de l'ensemble de plaque rotatif (50) génère un force de frottement non uniforme entre une surface inférieure du patin (53) et le sol, et
le robot nettoyeur (1) se déplace sous l'effet de la force de frottement non uniforme;
dans lequel la pluralité de moteurs (40) comprend:
un premier (41) ou un deuxième (42) moteur configuré de manière à permettre à l'ensemble de plaque rotatif (50) d'être incliné par rapport à un sol; et
un troisième moteur (43) configuré de manière à faire tourner l'ensemble de plaque rotatif (50).

2. Robot nettoyeur (1) selon la revendication 1, dans lequel chacune des unités de commande (10, 20) comprend:
un premier sous-cadre (33); et
l'ensemble de plaque rotatif (50) est monté sur le premier sous-cadre (30) et le premier sous-cadre (30) est connecté au premier moteur (41) ou au deuxième moteur (42) de façon à être configuré de manière à être incliné par rapport au sol par une rotation du premier sous-cadre (30).

3. Robot nettoyeur (1) selon la revendication 2, dans lequel le premier sous-cadre (30) est connecté au premier moteur (41) et au deuxième moteur (42) de façon à être configuré de manière à être mis en rotation autour d'un axe X par le premier moteur (41) et à être mis en rotation autour d'un axe Y par le deuxième moteur (42).

4. Robot nettoyeur (1) selon la revendication 3, dans lequel:
le premier moteur (41) est connecté au sous-cadre (30) par l'intermédiaire d'une première liaison (360); et
le deuxième moteur (42) est connecté au sous-cadre (30) par l'intermédiaire d'une seconde liaison (35) agencée de manière à croiser la première liaison.

5. Robot nettoyeur (1) selon la revendication 4, dans lequel la première liaison (360) et la seconde liaison (35) sont agencées perpendiculairement l'une à l'autre.

6. Robot nettoyeur (1) selon l'une quelconque des revendications 3 à 5, dans lequel chacune des deux ou plus de deux unités d'entraînement est configurée de telle sorte qu'une direction inclinée et un angle incliné de la surface inférieure de l'ensemble de plaque rotatif (50) par rapport au sol soient changés selon un degré de rotation du premier sous-cadre autour de l'axe X ou de l'axe Y et que le sens de rotation de l'ensemble de plaque rotatif soit changé selon une condition de rotation du troisième moteur,
dans lequel une direction de déplacement du robot nettoyeur est dictée par:
la direction inclinée de la surface inférieure de l'ensemble de plaque rotatif;
l'angle incliné de la surface inférieure de l'ensemble de plaque rotatif; et
le sens de rotation de la plaque rotative.

7. Robot nettoyeur (1) selon l'une quelconque des revendications 3 à 6, dans lequel le premier moteur (41) est positionné au-dessus du premier sous-cadre (30), et le premier sous-cadre est configuré de manière à être mis en rotation par l'intermédiaire d'un arbre rotatif (360) qui connecte le premier moteur (41) au premier sous-cadre (30).

8. Robot nettoyeur (1) selon l'une quelconque des revendications 2 à 7, dans lequel le deuxième moteur (42) est positionné à côté du premier sous-cadre (30), et le premier sous-cadre est configuré de manière à être mis en rotation par l'intermédiaire d'une liaison (35) qui connecte le deuxième moteur au premier sous-cadre.

9. Robot nettoyeur (1) selon l'une quelconque des revendications 2 à 8, dans lequel l'ensemble de plaque rotatif (50) comprend un arbre rotatif (51) qui est monté sur le premier sous-cadre (30) et une plaque rotative (52) qui est montée sur l'arbre rotatif (51).

10. Robot nettoyeur (1) selon la revendication 9, dans lequel la plaque rotative (52) est configurée de manière à être mise en rotation autour d'un axe de l'arbre rotatif par le troisième moteur (43).

11. Robot nettoyeur (1) selon la revendication 9 ou 10, dans lequel l'arbre rotatif (51) est pourvu d'un engrenage à une surface circonférentielle extérieure de celui-ci; et
dans lequel le troisième moteur (43) est monté avec une unité d'engrenage, qui engrène par les dents avec l'engrenage de l'arbre rotatif.

12. Robot nettoyeur (1) selon la revendication 11, dans lequel le sous-cadre (30) et la plaque rotative (52) sont fixés l'un à l'autre par l'intermédiaire d'une unité de verrouillage qui est insérée à travers le cadre et la plaque rotative.

13. Robot nettoyeur (1) selon la revendication 11 lorsqu'elle dépend de la revendication 5, dans lequel la première liaison ou la seconde liaison est pourvue de billes, le cadre est pourvu de parties de réception de billes dans lesquelles les billes sont respectivement reçues, et la plaque rotative est mise en rotation par les forces rotationnelles du premier moteur et du deuxième moteur.

14. Robot nettoyeur (1) selon l'une quelconque des revendications précédentes, dans lequel le patin (53) est constitué d'un matériau compressible de telle sorte que lorsque la surface inférieure de l'ensemble de plaque rotatif est inclinée par rapport au sol, une majeure partie de la surface inférieure du patin vienne en contact avec le sol.
